# EUROPEAN PATENT APPLICATION

(11) **EP 3 991 529 A1**
(43) Date of publication of application: **04.05.2022**
(21) Application number: 20204225.5
(22) Date of filing: 28.10.2020
(51) Int. Cl.: A01B 21/02, A01B 35/26, E02F 9/28, A01B 31/00

(54) **DEVICE FOR GROUND WORKING**

(71) Applicant: Hochschule Weihenstephan-Triesdorf, 85354 Freising (DE)
(72) Inventor: Kurz, Hariolf, 91746 Weidenbach (DE)
(74) Representative: Koplin, Moritz

(57) **Abstract**

Provided is device for ground working which is configured to be subjected to motion relative to the ground during operation. Device comprises a base with a leading section and a trailing section and a plurality of recesses in an area that makes contact to the ground during operation. Each of said recesses is defined by a surface of the base and at least two wall surfaces extending from the base surface.

## Description

### Field

The present disclosure relates to a device for ground working. In particular, the present disclosure relates to a device for ground working which is configured to be attached to a soil cultivation machine or a construction machine.

### Background

Devices for working the ground are subject to wear and tear as device surfaces make contact with the ground material (e.g., soil). To increase the durability of ground working devices, the devices may be made from or coated with more resistant materials.

Another approach is suggested in WO 2014/139733 A2 which teaches providing a deflection area with rib-shaped protrusions oriented perpendicular to a tool advancement direction to compress soil as "natural" wear protection into recesses between the protrusions.

### Summary

The present disclosure is directed at a device for ground working which is configured to be subjected to motion relative to the ground during operation. The device comprises a base with a leading section and a trailing section and a plurality of recesses in an area that makes contact to the ground during operation, each of said recesses being defined by a surface of the base and at least two wall surfaces extending from the base surface. According to a preferred embodiment, said area extends over at least 50%, preferably at least 60%, more preferably at least 80% of the entire length of the device.

In this regard, the term "device for ground working", as used throughout the description and the claims, particularly refers to a device that is pushed into or pulled (dragged) through the ground during use. For example, the device may be used to loosen the ground and/or to reshape the ground (including the removal of material from a ground area).

Moreover, the term "base", as used throughout the description and the claims, particularly refers to a structure (of substantially constant thickness) that is (capable of) lending support to other structures which are attached to, adhere to, or extend from the "base". Furthermore, the term "leading/trailing section", as used throughout the description and the claims, particularly refers to a use of the device in which the leading section (generally) makes contact with a ground area before the trailing section does.

The wall surfaces may extend in a direction which is:
- perpendicular to a longitudinal axis of the base;
- perpendicular to a direction of the motion; or
- parallel to a normal direction of the surface of the base.

In this regard, the formulation that wall surfaces "extend in a direction", as used throughout the description and the claims, is not limited to wall surfaces that are (exactly) parallel to the direction but shall encompass any wall surface that is not perpendicular to said direction. Moreover, wall surfaces do not have to be even but may be curved. For example, wall surfaces may be concave or convex.

The recesses may be formed between raised portions extending from the base, wherein each of said raised portions has a concave part oriented towards the leading section. Said raised portions may be made of the same material as said base. Alternatively, said raised portions may be made of any hard ceramics commonly used in tool making, such as AlO, ZrO, AlSi, SiO and TiN, or hard metals such as (W,Ti,Ta,Zr)-C-Co, or chrome chilled cast iron or combinations thereof.

The term "raised portions", as used throughout the description and the claims, particularly refers to parts of a patterned surface, which form protrusions from an otherwise substantially smooth or even surface. In addition, the formulation "oriented towards the leading section", as used throughout the description and the claims, particularly refers to an arrangement in which there is at least one straight line that connects a center of the concave part to a leading edge or a tip of the leading section, without intersecting with the raised portion (having the concave part).

As the device is pushed or pulled (or dragged) through the ground, the pocket formed by the concave part (which is oriented towards the leading section) is filled with ground material (e.g., soil) which builds-up a protective layer reducing wear and tear.

Each of said raised portions may have an undercut edge.

With the undercut edge oriented towards the leading section, the undercut edge may cut ground material from the ground which is then forced into the pocket formed by the undercut edge where it may adhere to the base and thus protect the base from abrasion.

A length of the undercut edge of the raised portion may be greater than a height and/or a width of the raised portion.

The base may comprise a side confined by two edges extending from the leading section to the trailing section. The undercut edge may extend laterally across the side. For example, the undercut edge may extend laterally across the side from one edge to the other.

The undercut edge may extend laterally across the side, along one or more straight lines.

For example, the undercut edge may have a V-shape. The opening of the V-shape may be oriented towards the leading portion.

The undercut edge may extend laterally across the side, along one or more curved lines.

For example, the undercut edge may have a U-shape. The opening of the U-shape may be oriented towards the leading portion.

The raised portions may be equidistantly spaced apart. For example, the centers of the raised portions may be arranged along a line which is divided by the centers into sections of equal length.

The raised portions may form a column or a matrix.

For example, the centers of raised portions of a first group may be arranged along a first line and the centers of raised portions of a second group may be arranged along a second line which is parallel to the first line.

Each of said raised portions may have an asymmetric cross section.

For example, each of said raised portions may have a fin-shaped cross section.

The undercut edge may divide the fin-shaped cross section into a concave side and a convex side.

The recesses may be formed by particles adhering to the base. Said particles may adhere directly or indirectly to the base. According to some embodiments, said particles are arranged on/adhered to a particularly sheet-like layer or substrate that is bondable or bonded to (the surface of) the base. Said particles may be spherical and/or may have a mean diameter/mean outer dimension of at least 0.1 mm, preferably of at least 0.2 mm, more preferably of at least 0.5 mm. Said particles may be made of any hard ceramics commonly used in tool making, such as AlO, ZrO, AlSi, SiO and TiN, or hard metals such as (W,Ti,Ta,Zr)-C-Co, or chrome chilled cast iron or combinations thereof.

The device may be configured to be attached to a soil cultivation machine.

For example, the device may be provided with one or more screw holes at the trailing section which allow attaching the device to soil cultivation equipment.

The device may be selected from the group consisting of a tine, a (plough) share, a blade, a chisel, and a colter.

The device may be configured to be attached to a construction machine.

For example, the device may be provided with one or more screw holes at the trailing section which allow attaching the device to construction equipment.

The device may be a tooth. For example, the device may be a bucket tooth such as an excavator or loader bucket tooth.

The device may be used in a method of working the ground in which the recesses are filled with ground material when the device makes contact with the ground.

### Brief Description of Drawings

The foregoing aspects and many of the attendant advantages will become more readily appreciated as the same becomes better understood by reference to the following description of embodiments, when taken in conjunction with the accompanying drawings, wherein like reference numerals refer to like parts throughout the various views, unless otherwise specified.
Fig. 1 shows a cross-sectional view of a device having a straight base that is patterned with raised portions on one side.
Fig. 2 shows a cross-sectional view of a device having a straight base that is patterned with raised portions on two sides (or circumferentially).
Fig. 3 shows a cross-sectional view of a device having a bent base that is patterned with raised portions on the concave side.
Fig. 4 shows a cross-sectional view of a device having a bent base that is patterned with raised portions on the convex side.
Fig. 5 shows a cross-sectional view of a device having a bent base that is patterned with raised portions on the concave side and on the convex side (or circumferentially).
Fig. 6 illustrates raised portions with straight edges.
Fig. 7 illustrates raised portions with V-shaped edges.
Fig. 8 illustrates raised portions with U-shaped edges.
Fig. 9a and Fig. 9b illustrate a top view and a side view of the leading and trailing sections according to a first example.
Fig. 10a and Fig. 10b illustrate a top view and a side view of the leading and trailing sections according to a second example.
Fig. na and Fig. 11b illustrate a top view and a side view of the leading and trailing sections according to a third example.
Fig. 12 illustrates a modification regarding the placement of the raised portions.
Fig. 13 illustrates another modification regarding the placement of the raised portions.
Fig. 14 illustrates another modification in which the recesses are formed by particles adhering to the base.
Fig. 15 shows a flow-chart of a method of working the ground.

Notably, the drawings are not drawn to scale and unless otherwise indicated, they are merely intended to conceptually illustrate the structures and procedures described herein.

### Description of Embodiments

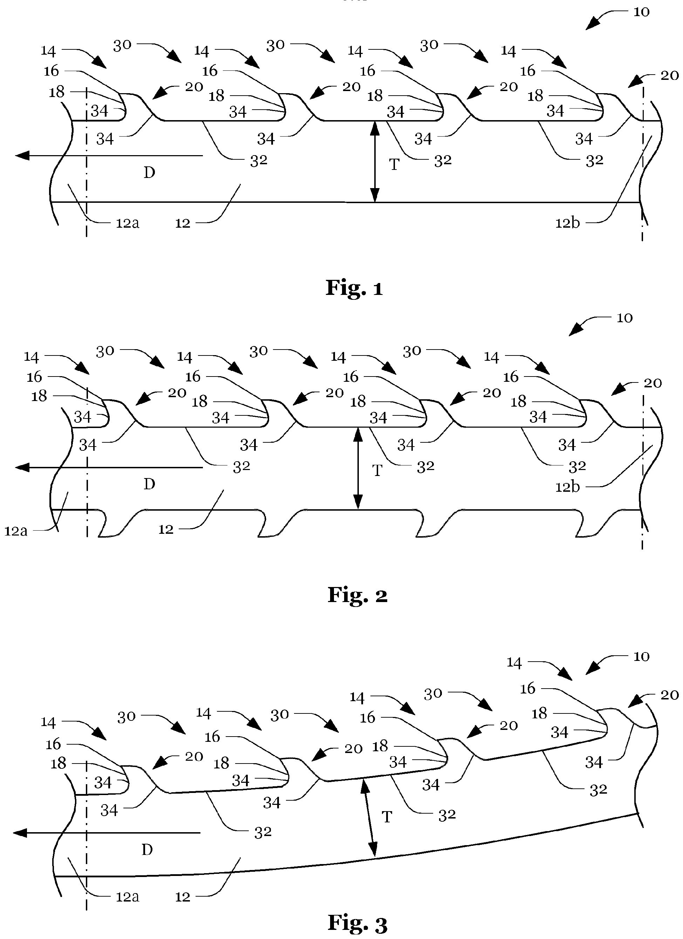

Fig. 1 shows a cross-sectional view of device 10. Device 10 has straight base 12 (of constant thickness T) that is patterned with raised portions 14 on one side. Raised portions 14 form recesses 30 in an area that makes contact to the ground during operation of device 10. Each recess 30 is defined by surface 32 of base 12 and wall surfaces 34 extending from base surface 32 in a direction which is perpendicular to direction D of the motion during operation. As shown in Fig. 1, wall surfaces 34 may be inclined relative to direction D/towards leading section 12a.

Raised portions 14 have undercut edges 16 and concave parts 18 oriented towards leading section 12a. Raised portions 14 are fin-shaped with convex side 20 oriented towards trailing section 12b. As shown in Fig. 2, base 12 can be patterned with raised portions 14 and recesses 30 on two sides (or circumferentially).

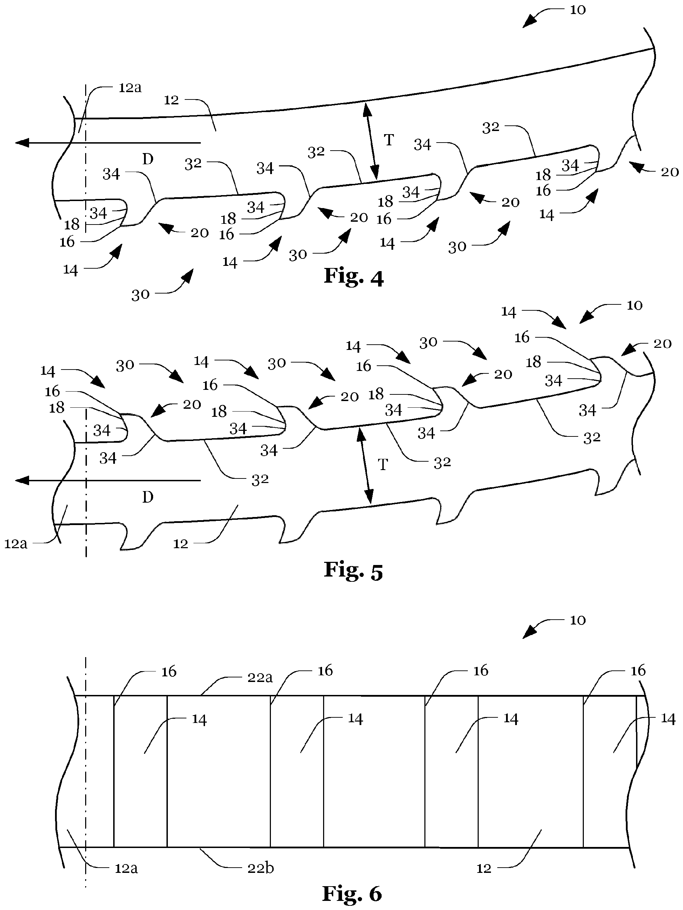

Fig. 3 illustrates a modification of device 10 in which base 12 is bent and patterned with raised portions 14 and recesses 30 on the concave side of base 12. Fig. 4 illustrates a modification of device 10 in which base 12 is bent and patterned with raised portions 14 and recesses 30 on the convex side of base 12. As illustrated in Fig. 5, bent base 12 may also be patterned with raised portions 14 and recesses 30 on the concave side and on the convex side (or circumferentially).

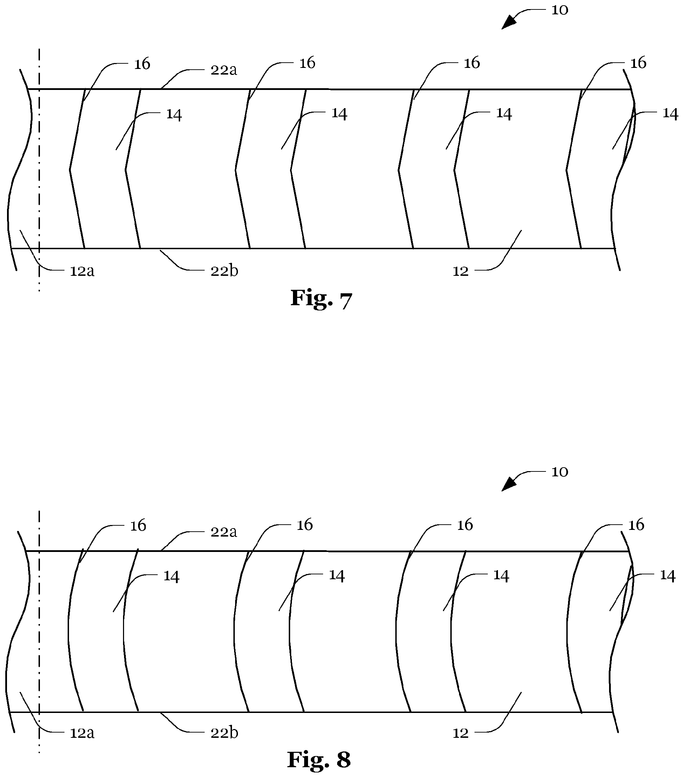

As shown in Fig. 6, base 12 may comprise a side confined by edges 22a and 22b extending from leading section 12a to trailing section 12b and undercut edges 16 may extend laterally across the side (from edge 22a to edge 22b). Undercut edges 16 extending laterally across the side may be straight, as illustrated in Fig. 6, but may also be V-shaped, as illustrated in Fig. 7, or U-shaped, as illustrated in Fig. 8.

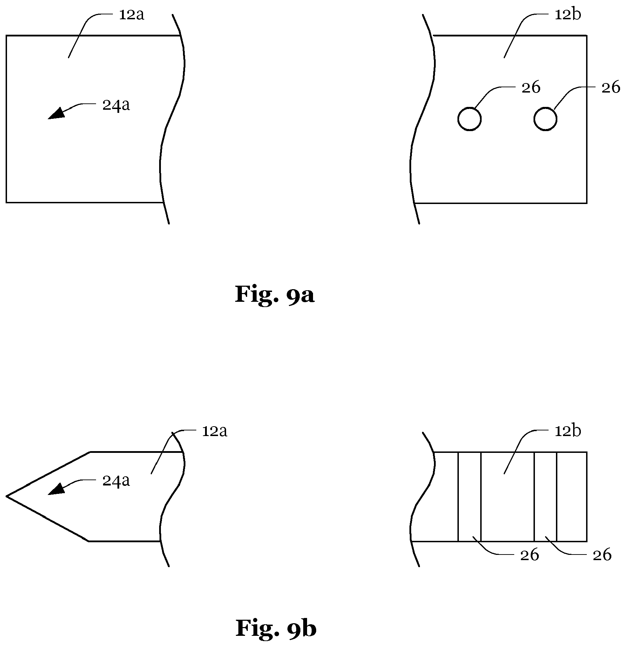

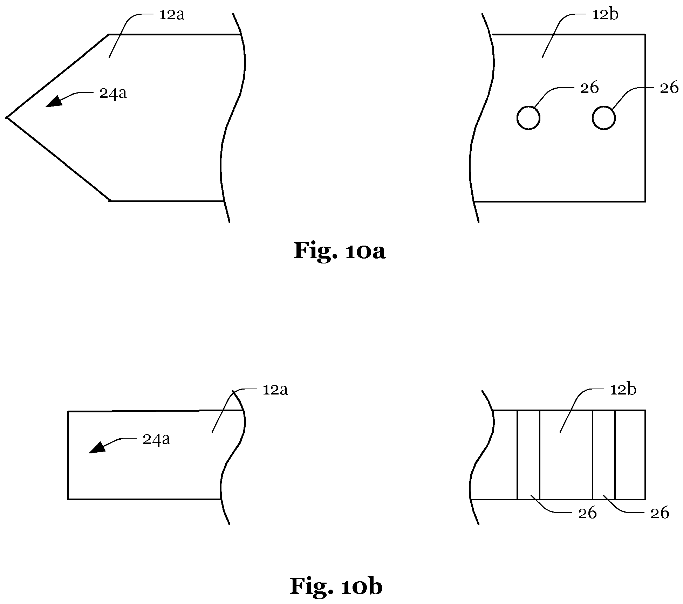

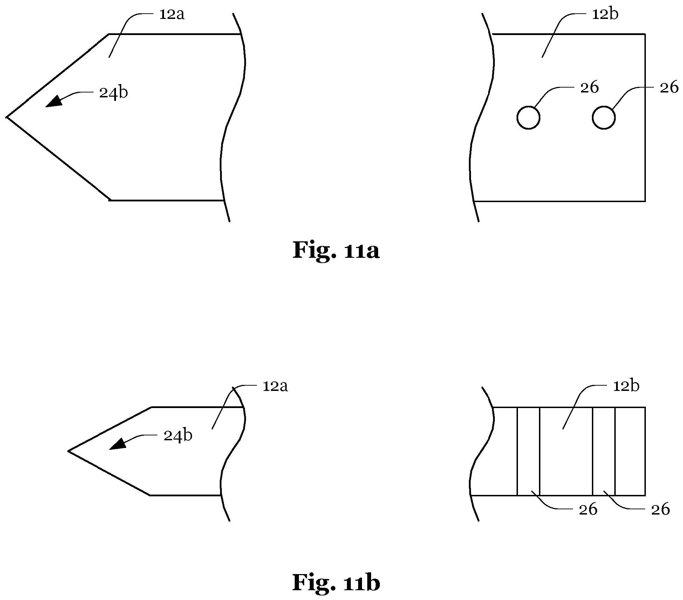

Fig. 9a and Fig. 9b show a top view and a side view of an exemplary leading section 12a and an exemplary trailing section 12b wherein leading section 12a has leading edge 24a. Fig. 10a and Fig. 10b also show a top view and a side view of an exemplary leading section 12a and an exemplary trailing section 12b, wherein leading section 12a has leading edge 24a. Fig. 11a and Fig. 11b show a top view and a side view of an exemplary leading section 12a and an exemplary trailing section 12b, wherein leading section 12a has a tip 24b. As illustrated in Fig. 9a, Fig. 10a and Fig. 11a trailing section 12b may have screw holes 26 for attaching device 10 to cultivation/construction equipment (not shown).

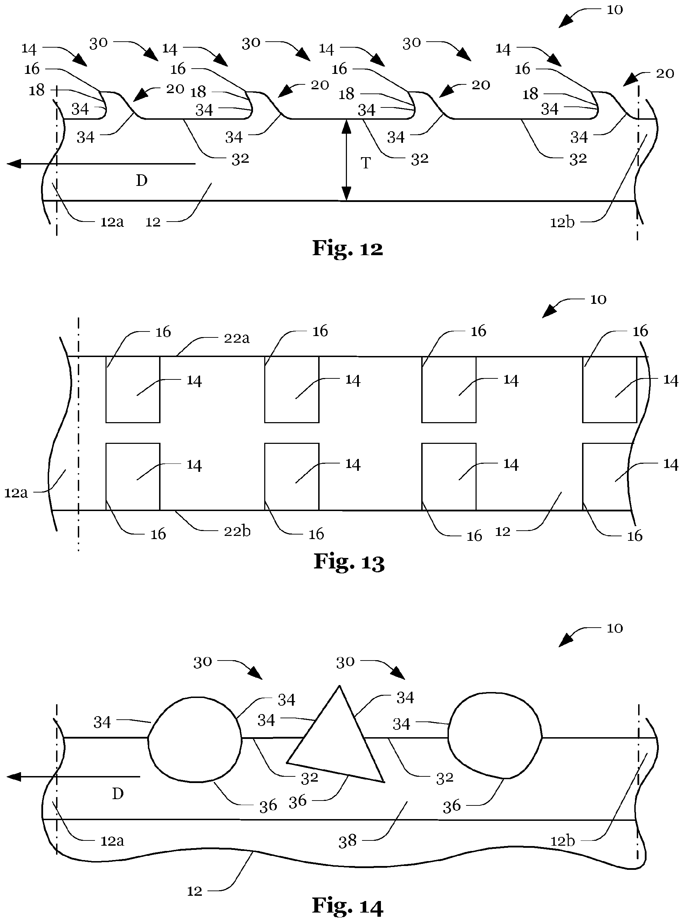

Fig. 12 illustrates a modification in which raised portions 14 are not (substantially) equidistantly spaced apart. Fig. 13 illustrates a modification in which raised portions 14 are equidistantly spaced apart and form a matrix.

Fig. 14 illustrates a modification in which recesses 30 are formed by particles 36 adhering to layer 38 of base 12. Layer 38 may comprise an adhesive and particles 36 may be randomly distributed across layer 38. Particles 36 may have different shapes (e.g., with or without edges) and sizes. For example, particles 36 may have a size of more than 0.5 mm. Particles 36 may be made of a wear-resistant material such as corundum.

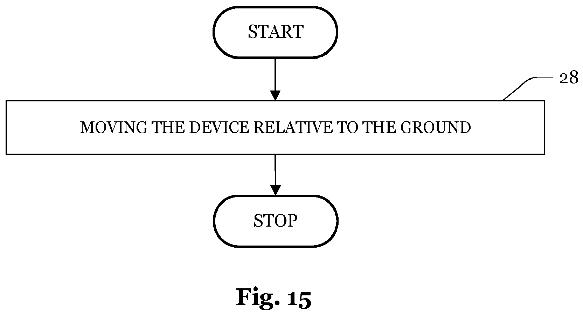

Fig. 15 shows a flow-chart of a method of working the ground. The method comprises step 28 of moving device 10 relative to the ground. As device 10 is moved relative to the ground, the pocket formed by concave part 18 is filled with ground material (e.g., soil) which builds-up a protective layer reducing wear and tear regarding base 12.

### Reference Signs List

- 10: device
- 12: base
- 12a: leading section
- 12b: trailing section
- 14: raised portions
- 16: undercut edge
- 18: concave part
- 20: convex side
- 22a: edge
- 22b: edge
- 24a: leading edge
- 24b: tip
- 26: screw hole
- 28: process step
- 30: recess
- 32: base surface
- 34: wall surface
- 36: particle
- 38: layer
- D: direction of motion
- T: thickness

## Claims

1. A device (10) for ground working which is configured to be subjected to motion relative to the ground during operation, the device (10) comprising:
a base (12) with a leading section (12a) and a trailing section (12b); and
a plurality of recesses (30) in an area that makes contact to the ground during operation, each of said recesses (30) being defined by a surface (32) of the base (12) and at least two wall surfaces (34) extending from the base surface (32).

2. The device (10) for ground working of claim 1, wherein the recesses are formed between raised portions (14) extending from the base (12), each of said raised portions (14) having a concave part (18) oriented towards the leading section (12a).

3. The device (10) for ground working of claim 2, wherein each of said raised portions (14) has an undercut edge (16).

4. The device (10) for ground working of claim 3, wherein a length of the undercut edge (16) of the raised portion (14) is greater than a height and/or a width of the raised portion (14).

5. The device (10) for ground working of claim 3 or 4, wherein the base (12) comprises a side confined by two edges (22a, 22b) extending from the leading section (12a) to the trailing section (12b) and the undercut edge (16) extends laterally across the side.

6. The device (10) for ground working of claim 5, wherein the undercut edge (16) extends laterally across the side, along one or more straight lines and wherein the undercut edge (16) has preferably a V-shape.

7. The device (10) for ground working of claim 5, wherein the undercut edge (16) extends laterally across the side, along one or more curved lines and wherein the undercut edge (16) has preferably a U-shape.

8. The device (10) for ground working of any one of claims 1 to 7, wherein the raised portions (14) are equidistantly spaced apart.

9. The device (10) for ground working of any one of claims 1 to 8, wherein the raised portions (14) form a column or a matrix.

10. The device (10) for ground working of any one of claims 1 to 9, wherein each of said raised portions (14) has an asymmetric cross section and wherein each of said raised portions (14) has preferably a fin-shaped cross section.

11. The device (10) for ground working of claim 1, wherein the recesses (30) are formed by particles (36) adhering to the base (12) and wherein said particles have preferably a mean diameter/mean outer dimension of at least 0.1 mm, more preferably of at least 0.2 mm, most preferably of at least 0.5 mm.

12. The device (10) for ground working of any one of claims 1 to 11, wherein the device is (10) configured to be attached to a soil cultivation machine.

13. The device (10) for ground working of claim 12, wherein the device (10) is selected from the group consisting of a tine, a (plough) share, a blade, a chisel, and a colter.

14. The device (10) for ground working of any one of claims 1 to 11, wherein the device (10) is configured to be attached to a construction machine.

15. The device (10) for ground working of claim 14, wherein the device (10) is a tooth.
